# EUROPEAN PATENT SPECIFICATION

(11) **EP 3 588 411 B1**
(45) Date of publication and mention of the grant of the patent: **30.04.2025**
(21) Application number: 18180588.8
(22) Date of filing: 28.06.2018
(51) Int. Cl.: G06Q 20/02

(54) **METHOD FOR GENERATING A PRIVILEGED TRANSACTION IN A BLOCKCHAIN AND METHOD FOR VALIDATING A BLOCK OF A BLOCKCHAIN**
VERFAHREN ZUR ERZEUGUNG EINER PRIVILEGIERTEN TRANSAKTION IN EINER BLOCKKETTE UND VERFAHREN ZUM VALIDIEREN EINES BLOCKS EINER BLOCKKETTE
PROCÉDÉ DE GÉNÉRATION D'UNE TRANSACTION PRIVILÉGIÉE DANS UNE CHAINE DE BLOCS ET PROCÉDÉ DE VALIDATION D'UN BLOC D'UNE CHAINE DE BLOCS

(43) Date of publication of application: 01.01.2020
(73) Proprietor: ALMA GmbH, 10625 Berlin (DE)
(72) Inventor: Bederov, Denis, 10789 Berlin (DE); Goldovskii, Vladimir, 214004 Smolensk (RU); Trylis, Sergiy, 10707 Berlin (DE); Saiadian, Surik, 350063 Krasnodar (RU)
(74) Representative: Manitz Finsterwald Patent- und Rechtsanwaltspartnerschaft mbB

(56) References cited:
- CHRISTIAN CACHIN ET AL: "Blockchain Consensus Protocols in the Wild", ARXIV.ORG, CORNELL UNIVERSITY LIBRARY, 201 OLIN LIBRARY CORNELL UNIVERSITY ITHACA, NY 14853, 6 July 2017 (2017-07-06), XP080774872
- XU XIWEI ET AL: "A Taxonomy of Blockchain-Based Systems for Architecture Design", 2017 IEEE INTERNATIONAL CONFERENCE ON SOFTWARE ARCHITECTURE (ICSA), IEEE, 3 April 2017 (2017-04-03), pages 243 - 252, XP033099728, DOI: 10.1109/ICSA.2017.33
- GIDEON GREENSPAN: "MultiChain Private Blockchain - White Paper", 1 December 2016 (2016-12-01), pages 1 - 17, XP055356077, Retrieved from the Internet <URL:http://web.archive.org/web/20161201162629/http://www.multichain.com/download/MultiChain-White-Paper.pdf> [retrieved on 20170317]

## Description

The present invention relates to a method for generating a privileged transaction in a blockchain and a method for validating a block of a blockchain.

Blockchains and methods for blockchains are disclosed in Christian Cachin: "Blockchain Consensus Protocols in the Wild" (XP080774872), wherein a blockchain using a list of permitted nodes is described. Xu Xiwei: "A Taxonomy of Blockchain-Based Systems for Architecture Design" (DOI: 10.1109/ICSA.2017.33) compares different blockchain architectures and permission models.

Gideon Greenspan: "MultiChain Private Blockchain - White Paper" discloses the details of a permissioned blockchain.

Blockchains are becoming more and more popular in a variety of applications. A blockchain is a distributed database, wherein information is recorded within a public transaction ledger (i.e. the blockchain).

For example, blockchains can be used for providing a currency, e.g. in the form of "digital money". One well-known example of such a currency is a bitcoin, which is a crypto-currency that is based on a peer-to-peer network. Other digital currencies include Litecoin or Primecoin.

In order to transfer amounts (or "coins") of such a currency within the blockchain, transactions (or transfer transactions, as used herein) are used. The transactions are usually distributed to nodes of the blockchain. The nodes check the transaction for correctness. Correct transactions can then be collected into blocks, wherein the transactions only become valid if they are included in one or more validated blocks of the blockchain.

Furthermore, in order to slowly increase the amount of currency that is present in the blockchain over time, special or privileged transactions can be performed. These privileged transactions can e.g. generate new amounts of the currency ("out of the nothing"), e.g. by mining or minting. Such a currency-generating transaction can be termed a "coinbase transaction" or more generally a "generation transaction".

However, in terms of security, it can be beneficial to assure that only the correct members/users/nodes of the blockchain are allowed to generate new currency. In contrast, e.g. in the bitcoin network, new currency can be generated by every member.

Consequently, current blockchains are vulnerable if malicious nodes exist or even if a majority of the nodes of blockchain is malicious. Then, the integrity of the blockchain can be compromised and the blockchain can be vulnerable for different attacks.

It is therefore the object of the present invention to provide a method that improves the security of the blockchain.

This object is solved by methods in accordance with claim 1 and claim 2.

Claim 1 relates to a method for generating a privileged transaction of a blockchain, wherein
- the privileged transaction is generated by a user by means of a first node of the blockchain,
- optionally a cryptographic signature using a private key of the user is added to the privileged transaction, thereby optionally creating a signed privileged transaction,
- the (signed) privileged transaction is broadcast to a plurality of other nodes of the blockchain, wherein the other nodes validate if the user is permitted to perform the privileged transaction, wherein the permission to perform the privileged transaction was stored within the blockchain before the generation of the privileged transaction.

Claim 2 relates to a method for validating a block of a blockchain, wherein
- the block is generated by a user of the blockchain by means of a first node of the blockchain, wherein the block comprises one or more transactions,
- optionally a cryptographic signature using a private key of the first node is added to the block, thereby optionally creating a signed block,
- the (signed) block is broadcast to a plurality of other nodes of the blockchain, wherein the other nodes preferably verify the cryptographic signature of the signed block using a public key of the user, wherein the other nodes validate if the user is permitted to validate the block, wherein the permission to perform the validation of the block was stored with in the blockchain before the validation of the block.

In other words, the invention is based on the finding that the security of the blockchain can be improved, if the user (or the respective first node of the user) require an authorization/permission to perform the privileged transaction, as the permission can be revoked e.g. for malicious nodes. Furthermore, it has proven to allow an easy implementation of the authorization into existing mechanisms of a blockchain, if the permission to perform the privileged transaction is stored within the blockchain itself. Since the blockchain itself is usually (at least partially) stored within each node of the blockchain, each node can easily verify/validate if a user is permitted to perform the privileged transaction. Only if the user is permitted to perform the privileged transaction, then the privileged transaction is collected into one of the blocks of the blockchain. The information if the user (or the node of the user) is permitted to perform the privileged transaction can be stored within the blockchain in different ways. It is only necessary that it is clear from the information stored in the blockchain if the user is permitted to perform the privileged transaction.

Particularly, the permission to perform the privileged transaction can be given by a transfer transaction (i.e. a grant permission transaction), as mentioned later. The grant permission transaction can e.g. transfer an amount of currency either to itself, wherein the transaction then can comprise an indication of the user, or the amount of currency can be directly transferred to a wallet of the user. As long as the transferred amount of the grant permission transaction is not spent, the permission may remain valid.

In the same way, validating a block of the blockchain can also be reserved to users that are permitted to validate the block. Thereby, e.g. an amount of currency transferred to the user who validates a block of the blockchain is not transferred to a malicious user or node. Again, as the permission to perform the validation of a block is stored in the blockchain itself, only a small change to the code of an existing blockchain (e.g. the bitcoin blockchain) is necessary.

Particularly, the permission to perform the privileged transaction and/or the permission to perform the validation of the block can be stored within the blockchain and/or be managed centralized in the blockchain. As the blockchain is usually distributed over a plurality of nodes, the invention adds a small centralized element that greatly improves the security of the blockchain.

For completeness, it should be mentioned that the other nodes may verify the cryptographic signature of the signed privileged transaction using a public key of the first node. Preferably, only if also the public key and the private key of the user are corresponding, then the transaction is collected into one of the blocks. To put it short, the transaction and/or the block are regarded as payload that is secured by the cryptographic signature.

In general, the signed privileged transaction and/or the signed block may also be broadcast to only one other node of the blockchain, wherein the other node verifies the cryptographic signature of the signed privileged transaction using a public key of the first node (i.e. of the user).

In the following, further aspects of the invention are described in more detail.

The blockchain can comprise the first node and the aforementioned other nodes, wherein the nodes can be part of the internet or of a data network. The nodes can have a data connection amongst each other. Particularly, all nodes can be identical to the first node.

A node can comprise only a software which allows one user (i.e. a market participant) to manage an account. The node may be formed by an instance which comprises the private key (i.e. the private key of the user). The software or node is not required to but can comprise a copy of the blockchain.

The private key and the public key of the first node may form a key-pair (i.e. the private and the public key correspond to each other). The private key used for adding the cryptographic signature can e.g. be the private key of a user, the private key of a node device or the private key linked to a specific account.

Particularly, the nodes may be peer-to-peer nodes. The nodes may be independent from each and/or may be controlled by independent entities and/or persons. Every node may be a separate computer having a dedicated processor, memory devices and/or input-output-devices for communicating with further nodes. The first node and/or the other nodes can be a wallet device wherein the wallet device can be a personal computer (PC), a handheld computer or a smartphone. The wallet device can also be named an e-wallet or a crypto-wallet.

The blockchain may store every transaction e.g. the above-mentioned privileged transaction and/or the later mentioned transfer transactions since the origin of the blockchain, wherein a complete copy of the transaction history can be stored by at least some of the nodes.

In case the (transfer) transactions are used to transfer digital money or a digital currency, the transactions can comprise one or more inputs or "unspent" inputs, which indicate an amount of currency a node (or the user operating the node) possesses (i.e. a credit balance). In other words, the inputs define how much the user can spend with the transfer transaction. The inputs can be received from one of the nodes and/or from one of the blocks of the blockchain. Furthermore, the transaction can comprise one or more outputs. Each output indicates how much of the currency is to be transferred to a specific account (i.e. to another node).

For example, each output can indicate one account number and the amount of currency that is to be transferred to the respective account number. A transaction can comprise a transaction fee which is awarded to the node validating the block that contains the transaction.

The transaction can also comprise a transaction signature, e.g. a further cryptographic signature that is used to sign the transaction itself. The further cryptographic signature can e.g. be based on a private key of a user who wants to transfer digital money to another user. The further cryptographic signature can be based on a hash-value of the transaction which is encrypted with the private key, e.g. of the user. The public key can e.g. represent an e-wallet. The further cryptographic signature could also be termed in "inner" cryptographic signature, as the cryptographic signature that is added after the transaction has been generated can also be based at least in part on the inner cryptographic signature. The cryptographic signature that is added to generate the signed privileged transaction (as used herein) could - accordingly - be named and "outer" cryptographic signature. Alternatively, the cryptographic signature that is added to generate the signed transaction could also be the inner cryptographic signature. In short, the cryptographic signature that is added to generate the signed privileged transaction (or the signed block) comprises a hash-value of the information contained in the privileged transaciton (and/or the block). The hash-value can be encrypted with the private key of the first node (e.g. a private key of the user).

It has to be noted that the above-mentioned features of a transaction can relate to the privileged transaction and/or to the transfer transactions mentioned below, if not stated otherwise. A transfer transaction - as used herein - indicates a transaction that transfers an amount of currency from one account (or wallet) to another.

The transactions can be grouped into blocks. For example, all transactions can be grouped into one minute blocks or ten minute blocks. This means that all transactions that have been generated within the last one or ten minutes are grouped into one block. For the avoidance of doubt, it is noted that a block can contain only transactions, only signed transactions, only privileged transactions, only signed privileged transactions or a mixture of the above. Thus, a signed block can comprise one or more signed transactions.

According to the invention, the permission is stored as a transfer transaction within the blockchain. This transfer transaction could then also be termed a "grant permission transaction". In other words, a user (or node) that has received an amount of currency using a specific transfer transaction can thereby be defined as eligible for performing the special transaction. This bears the advantage, that a mechanism inherent to the blockchain is used to grant the permission to perform a privileged transaction/validate a block of the blockchain to specific users. Consequently, only minimal changes i.e. in the source code of an existing blockchain are necessary to implement this granting of permissions.

According to the invention, the transfer transaction representing the permission (i.e. the grant permission transaction) origins from a trusted wallet. The trusted wallet can be a wallet that receives special permissions, as described later in greater detail. Thereby, it is possible to centrally define that transfer transactions or grant permission transactions from the trusted wallet give the recipient of the transfer transaction the right to perform the privileged transaction and/or to validate a block of the blockchain.

Consequently, the transfer transaction (i.e. the grant permission transaction) from the trusted wallet preferably comprises an indication of the user. The indication of the user can e.g. be an account number of the user, a public key or a public key-hash of the user, or the like. The grant permission transaction from the trusted wallet may e.g. transfer a very small amount of currency to the user that shall be permitted to perform the special transaction and/or shall be permitted to validate a block of the blockchain.

If a transfer transaction/grant permission transaction from the trusted wallet is used, this has the advantage that the grant permission transaction is stored in the blockchain so that every node of the blockchain is aware of this grant permission transaction. Thereby, every node of the blockchain is enabled to validate/verify if a specific user is permitted to perform the privileged transaction and/or is permitted to validate a block of the blockchain. Again, as all information necessary for the validation of the permissions of a user is stored within the blockchain, this mechanism can easily be implemented in an existing blockchain. Also, a tampering with the information stored to grant the specific permissions is practically impossible since copies of the blockchain usually exist within a plurality of the nodes of the blockchain and usually far less than 50% of the nodes are controlled by the same person or organization (more than 50% would -in some cases- allow tampering with the blockchain).

Preferably, the permission is upheld as long as the amount of currency transferred in the grant permission transaction, remains unspent. As soon as the amount of currency is spent (i.e. is transferred to a further user or account), the permission is void.

Preferably, the transfer transaction (i.e. the grant permission transaction) transfers an amount of currency from the trusted wallet to itself. In other words, the trusted wallet initiates a transfer transaction which transfers an amount of currency (in a circle) to the trusted wallet itself. This transfer transaction comprises - as mentioned before - an indication of the user which should gain the right to perform the privileged transaction and/or to perform a validation of a block. As an advantage, the user then cannot erroneously spend the transferred amount (thereby losing the permission). Also, the trusted wallet can then remove the permission by spending the corresponding amount, thus e.g. allowing to revoke the permission from malicious users/malicious nodes.

Alternatively, as already mentioned, the transfer transaction (i.e. grant permission transaction) may transfer an amount of currency from the trusted wallet to the user. Thereby, the user directly received the amount. The permission preferably exists, as long as the received amount from the trusted wallet is unspent.

Advantageously, the trusted wallet receives an amount of currency from a root wallet. In other words, the root wallet transfers some amount of currency to the trusted wallet (or several different trusted wallets) before the trusted wallet can transfer amounts to users. Thereby, the granting of permissions can have several stages. For example, the different stages can be similar to a chain of certificates. Particularly, the root wallet can use a grant permission transaction to create a first trusted wallet. Then, the first trusted wallet can use a grant permission transaction to create a second trusted wallet. This process can be repeated until an n^{th} trusted wallet has been created. The n^{th} trusted wallet can then use a grant permission transaction to grant permission to an actual user wallet. Providing different stages of permission can have the advantage that in case of problems, e.g. only the permission of the n^{th} trusted wallet needs to be revoked, whereas the permissions granted to the trusted wallets "closer" to the root wallet can remain intact.

Further advantageously, the root wallet is defined and stored in the genesis block or in a block directly following the genesis block of the blockchain. By storing the root wallet in the genesis block of the blockchain, it is impossible that a fork of the blockchain eliminates the root wallet. Thus, again, the security of the blockchain is further improved.

The transfer transaction that transfers an amount of currency from the root wallet to the trusted wallet can comprise an unspent input of the root wallet. This transaction can also be termed a "grant permission transaction", as mentioned before. This transfer transaction can further comprise the address or account number (e.g. in the form of a public key) of the trusted wallet as an output. Thus, the trusted wallet receives an amount of currency from the root wallet. Thereby, the trusted wallet is given the role of a "certification authority". Alternatively to comprising an address or account number from the trusted wallet or from the root wallet, the availability of funds from the trusted wallet or from the root wallet can be sufficient to provide special rights (e.g. to act as a "certification authority").

In the same manner, a further transfer transaction (i.e. a further grant permission transaction) can transfer an amount of currency from the trusted wallet to the user (i.e. to a wallet of the user or to the above- mentioned first node). This grant permission transaction can comprise an unspent input of the trusted wallet. This grant permission transaction can comprise an account number or address of the user (i.e. an indication of the user) as an output. Thereby, the user receives an amount of currency, wherein this amount of currency / this transfer transaction may allow the user to perform the privileged transaction. Advantageously, the user is only allowed to perform the privileged transaction after the transfer transaction from the trusted wallet to the user has been included in one or more validated blocks.

Preferably, the privileged transaction performs a generation of an amount of currency. In other words, the privileged transaction can be a coinbase transaction or generation transaction or even a ("normal") transfer transaction, wherein a transfer transaction can also be used to generate new coins. The number of coins, i.e. the amount of currency that is generated, may be based on the coin age of coins of the user. The coin age may be defined as the number of coins (i.e. the amount of currency) of the user multiplied with the time the user has possessed the coins. The mount of currency generated in the privileged transaction may be credited to the user.

Further preferably, the amount of currency received from the trusted wallet indicates how much currency may be generated in the privileged transaction. For example, if the trusted wallet has transferred 10 micro-coins to the user, this can indicate that the user may generate within the privileged transaction an amount of 10 % of the coins he possesses or e.g. an amount of 10 % of the coins he possesses multiplied by the amount of time he has possessed the coins.

For example, the privileged transaction can comprise as inputs at least a part or all of the unspent inputs of the user. The privileged transaction can also comprise a reference to the amount received from the trusted wallet and/or to the root wallet. Furthermore, the privileged transaction can comprise outputs that amount to a greater amount of currency than the inputs. Thereby new currency is generated that is credited to the user.

New currency can thus be created by the privileged transaction, preferably by the principle of "proof of stake" (PoS). In contrast to "proof of work" (PoW) as e.g. used in the bitcoin blockchain, PoS does not require huge amounts of energy. Therefore, the blockchain can be very energy-efficient.

Further preferably, the permission is revoked by spending the amount transferred in the transfer transaction/ grant permission transaction. The amount can be spent e.g. by the user himself or by the trusted wallet. Thereby, e.g. if a user or node is identified as malicious, the trusted wallet can spend the amount of currency transferred in the transfer transaction that indicates the malicious user, thereby revoking the permission of the malicious user.

The invention also relates to a system for a blockchain as defined in claim 10.

The disclosure finally relates to a node device of a blockchain, wherein the node device is configured to
- generate a privileged transaction of the blockchain for a user,
- preferably add a cryptographic signature using a private key of the user to the privileged transaction, thereby creating a (signed) privileged transaction,
- broadcast the signed privileged transaction to a plurality of the other nodes of the blockchain,
   and/or
wherein the first node is adapted to validate a block of the blockchain for the user, wherein the first node is adapted to
- generate the block of the blockchain, wherein the block comprises one or more transactions,
- preferably add a cryptographic signature using a private key of the first node to the block, thereby creating a (signed) block,
- broadcast the signed block to a plurality of the other nodes of the blockchain.

The disclosure related to the methods of the invention also relates to the inventive system and the node device. This is particularly true in view of the advantages and preferred embodiments mentioned herein.

Various features and advantages of the present invention will become more apparent from the following description and accompanying drawings, wherein:
- Fig. 1: shows a schematic view of a blockchain;
- Fig. 2: shows a schematic view of the working principle of a blockchain when a privileged transaction is generated and distributed.

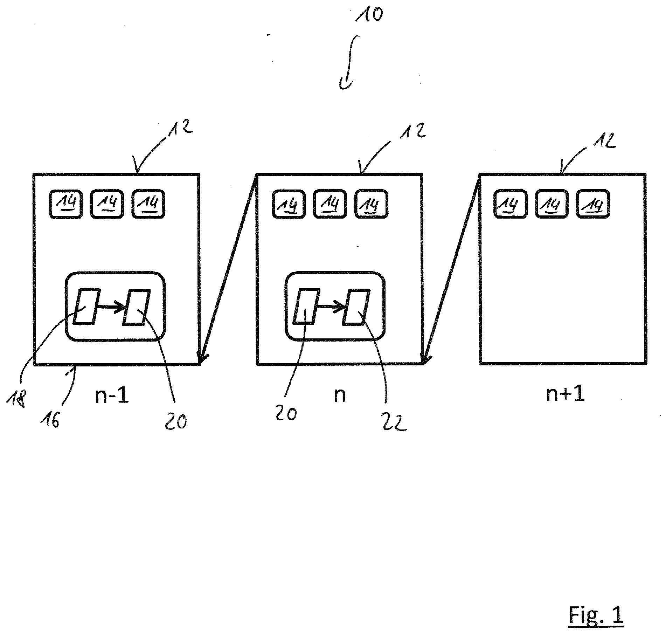

Fig. 1 shows a blockchain 10 comprising of a plurality of different blocks 12. The blocks 12 are each linked to the previous block 12. Each block 12 comprises a plurality of transactions 14.

The first block 12 is termed the genesis block 16. In the genesis block 16 the address of a root wallet 18 is stored. Alternatively, the genesis block 16 can be empty except for a coinbase. Then the address of the root wallet 18 can be stored in a following block 12.

As an example, the genesis block 16 can also comprise a transfer transaction 14 (i.e. a grant permission transaction) from the root wallet 18 to a trusted wallet 20.

The trusted wallet 20 may transfer an amount of currency to a user wallet 22, wherein the transfer transaction 14 that transfers the amount to the user wallet 22 is stored in another block 12. This transfer transaction 14 (i.e. the grant permission transaction) gives the user of wallet 22 the right to perform privileged transactions 14a. Alternatively, the trusted wallet 20 can use a transfer transaction 14 to transfer an amount to itself (i.e. to the trusted wallet 20). This transfer transaction 14 can comprise information about the user wallet 22 thereby granting the user of wallet 22 the right to perform privileged transactions 14a.

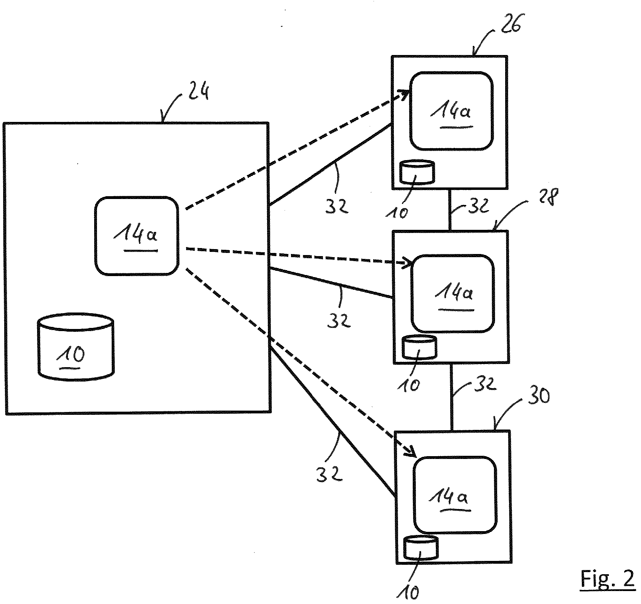

The process of the generating and processing a privileged transaction 14a is shown in Fig. 2.

Fig. 2 shows a first node 24, a second node 26, a third node 28 and a fourth node 30. The nodes 24 to 30 execute the functions of the blockchain 10. The nodes 24 to 30 are interconnected using data connections 32 (e.g. Ethernet-connections). The nodes 24 to 30 can be identical instances of the same kind of node 24 to 30, wherein in the following the first node 24 is exemplary described in more detail.

Each of the nodes 24 to 30 stores a copy of the blockchain 10.

The first node 24 generates a privileged transaction 14a. The first node 24 then cryptographically signs the privileged transaction and transmits the signed privileged transaction 14 to the other nodes 26 to 30. The other nodes 26 to 30 then check in their copies of the blockchain 10 if the first node 24 has received an amount of currency from the trusted wallet 20 in the past and if the amount of currency that has been received from the trusted wallet 20 is still unspent (or that the amount that the trusted wallet 20 has transferred to itself is still unspent). If this is the case, the other nodes 26 to 30 accept the privileged transaction 14a and e.g. an amount of currency is credited to the user wallet 22 of the user of the first node 24 (coinbase).

However, if the other nodes 26 to 30 detect that either no transaction from the trusted wallet 20 to the user wallet 22 exists or that an amount that has been transferred from the trusted wallet 20 to the user wallet 22 has already been spent (i.e. the permission has been revoked), then the privileged transaction 14a is not accepted. Thereby, e.g. a malicious node or user can be excluded from performing privileged transactions 14a. Thereby, the security of the blockchain 10 is increased.

It is noted that the above is correspondingly true for the validation of a block 12. In that case, the privileged transaction 14a in Fig. 2 is to be replaced with a block 12.

### List of reference signs

- 10: blockchain
- 12: block
- 14: transaction
- 14a: privileged transaction
- 16: genesis block
- 18: root wallet
- 20: trusted wallet
- 22: user wallet
- 24: first node
- 26: second node
- 28: third node
- 30: fourth node
- 32: data connection

## Claims

1. A method for generating a privileged transaction (14a) in a blockchain (10), wherein
- the privileged transaction (14a) is generated by a user by means of a first node (24) of the blockchain (10),
- a cryptographic signature using a private key of the user is added to the privileged transaction (14a), thereby creating a signed privileged transaction (14a),
- the signed privileged transaction (14a) is broadcast to a plurality of other nodes (26-30) of the blockchain 10), wherein the other nodes (26-30) validate if the user is permitted to perform the privileged transaction (14a), wherein the permission to perform the privileged transaction (14a) was stored within the blockchain (10) before the generation of the privileged transaction (14a), wherein the permission is stored as a transfer transaction (14) within the blockchain (10) and the transfer transaction (14) representing the permission origins from a trusted wallet (20).

2. A method for validating a block (12) of a blockchain (10), wherein
- the block (12) is generated by a user of the blockchain (10) by means of a first node (24) of the blockchain (10), wherein the block (12) comprises one or more transactions (14),
- a cryptographic signature using a private key of the first node (24) is added to the block (12), thereby creating a signed block (12),
- the signed block (12) is broadcast to a plurality of other nodes (26-30) of the blockchain (10), wherein the other nodes (26-30) validate if the user is permitted to validate the block (12), wherein the permission to perform the validation of the block (12) was stored within the blockchain (10) before the validation of the block (12), wherein the permission is stored as a transfer transaction (14) within the blockchain (10) and the transfer transaction (14) representing the permission origins from a trusted wallet (20).

3. The method of claim 1 or 2, wherein
the transfer transaction (14) comprises an indication of the user.

4. The method of at least one of the previous claims, wherein
the transfer transaction (14) transfers an amount of currency from the trusted wallet (20) to itself (20).

5. The method of at least one of the claims 1 to 3, wherein
the transfer transaction (14) transfers an amount of currency from the trusted wallet (20) to the user (22).

6. The method of at least one of the previous claims, wherein
the trusted wallet (20) receives an amount of currency from a root wallet (18).

7. The method of claim 6, wherein
the root wallet (18) is defined and stored in the genesis block (16) of the blockchain (10).

8. The method of at least one of the previous claims, wherein
the privileged transaction (14a) performs a generation of an amount of currency.

9. The method of at least one of claims 3 to 8, wherein
the permission is revoked by spending the amount transferred in the transfer transaction (14).

10. A system for a blockchain (10) comprising
- a first node (24),
- a plurality of other nodes (26-30), wherein the nodes (24-30) store copies of the blockchain (10),
wherein the nodes (24-30) are connected to each other using data connections (32),
and wherein the first node (24) is adapted to
- generate a privileged transaction (14a) of the blockchain (10) for a user,
- add a cryptographic signature using a private key of the user to the privileged transaction, thereby creating a signed privileged transaction (14a),
- broadcast the signed privileged transaction (14a) to a plurality of the other nodes (26-30) of the blockchain (10), wherein the other nodes (26-30) are configured to validate if the user is permitted to perform the privileged transaction (14a), wherein the permission to perform the privileged transaction (14a) was stored within the blockchain (10) before the generation of the privileged transaction (14a), wherein the permission is stored as a transfer transaction (14) within the blockchain (10) and the transfer transaction (14) representing the permission origins from a trusted wallet (20), and/or
wherein the first node (24) is adapted to validate a block (12) of the blockchain (10) for the user, wherein the first node (24) is adapted to
- generate the block (12) of the blockchain (10), wherein the block (12) comprises one or more transactions (14),
- add a cryptographic signature using a private key of the first node (24) to the block (12), thereby creating a signed block (12),
- broadcast the signed block (12) to a plurality of the other nodes (26-30) of the blockchain (10), wherein the other nodes (26-30) validate if the user is permitted to validate the block (12), wherein the permission to perform the validation of the block (12) was stored within the blockchain (10) before the validation of the block (12), wherein the permission is stored as a transfer transaction (14) within the blockchain (10) and the transfer transaction (14) representing the permission origins from a trusted wallet (20).

## Patentansprüche

1. Verfahren zum Erzeugen einer privilegierten Transaktion (14a) in einer Blockchain (10), wobei
- die privilegierte Transaktion (14a) durch einen Benutzer mittels eines ersten Knotens (24) der Blockchain (10) erzeugt wird,
- eine kryptographische Signatur unter Verwendung eines privaten Schlüssels des Benutzers zu der privilegierten Transaktion (14a) hinzugefügt wird, wodurch eine signierte privilegierte Transaktion (14a) erzeugt wird,
- die signierte privilegierte Transaktion (14a) an eine Vielzahl von anderen Knoten (26-30) der Blockchain (10) rundgesendet wird, wobei die anderen Knoten (26-30) validieren, ob dem Benutzer erlaubt ist, die privilegierte Transaktion (14a) durchzuführen, wobei die Erlaubnis, die privilegierte Transaktion (14a) durchzuführen, vor der Erzeugung der privilegierten Transaktion (14a) innerhalb der Blockchain (10) gespeichert wurde, wobei die Erlaubnis als eine Transfertransaktion (14) innerhalb der Blockchain (10) gespeichert wird und die Transfertransaktion (14), die die Erlaubnis darstellt, von einer vertrauenswürdigen Wallet (20) stammt.

2. Verfahren zum Validieren eines Blocks (12) einer Blockchain (10), wobei
- der Block (12) durch einen Benutzer der Blockchain (10) mittels eines ersten Knotens (24) der Blockchain (10) erzeugt wird, wobei der Block (12) eine oder mehrere Transaktionen (14) umfasst,
- eine kryptographische Signatur unter Verwendung eines privaten Schlüssels des ersten Knotens (24) zu dem Block (12) hinzugefügt wird, wodurch ein signierter Block (12) erzeugt wird,
- der signierte Block (12) an eine Vielzahl von anderen Knoten (26-30) der Blockchain (10) rundgesendet wird, wobei die anderen Knoten (26-30) validieren, ob dem Benutzer erlaubt ist, den Block (12) zu validieren, wobei die Erlaubnis, die Validierung des Blocks (12) durchzuführen, vor der Validierung des Blocks (12) innerhalb der Blockchain (10) gespeichert wurde, wobei die Erlaubnis als eine Transfertransaktion (14) innerhalb der Blockchain (10) gespeichert wird und die Transfertransaktion (14), die die Erlaubnis darstellt, von einer vertrauenswürdigen Wallet (20) stammt.

3. Verfahren nach Anspruch 1 oder 2, wobei
die Transfertransaktion (14) eine Angabe des Benutzers umfasst.

4. Verfahren nach zumindest einem der vorstehenden Ansprüche, wobei
die Transfertransaktion (14) einen Währungsbetrag von der vertrauenswürdigen Wallet (20) an sich selbst (20) überträgt.

5. Verfahren nach zumindest einem der Ansprüche 1 bis 3, wobei
die Transfertransaktion (14) einen Währungsbetrag von der vertrauenswürdigen Wallet (20) an den Benutzer (22) überträgt.

6. Verfahren nach zumindest einem der vorstehenden Ansprüche, wobei
die vertrauenswürdige Wallet (20) einen Währungsbetrag von einer Ursprungs-Wallet (18) empfängt.

7. Verfahren nach Anspruch 6, wobei
die Ursprungs-Wallet (18) in dem Genesis-Block (16) der Blockchain (10) definiert und gespeichert wird.

8. Verfahren nach zumindest einem der vorstehenden Ansprüche, wobei
die privilegierte Transaktion (14a) eine Erzeugung eines Währungsbetrags durchführt.

9. Verfahren nach zumindest einem der Ansprüche 3 bis 8, wobei
die Erlaubnis widerrufen wird, indem der in der Transfertransaktion (14) übertragene Betrag ausgegeben wird.

10. System für eine Blockchain (10), umfassend
- einen ersten Knoten (24),
- eine Vielzahl von anderen Knoten (26-30), wobei die Knoten (24-30) Kopien der Blockchain (10) speichern,
wobei die Knoten (24-30) unter Verwendung von Datenverbindungen (32) miteinander verbunden sind,
und wobei der erste Knoten (24) geeignet ist, um
- eine privilegierte Transaktion (14a) der Blockchain (10) für einen Benutzer zu erzeugen,
- eine kryptographische Signatur unter Verwendung eines privaten Schlüssels des Benutzers zu der privilegierten Transaktion hinzuzufügen, wodurch eine signierte privilegierte Transaktion (14a) erzeugt wird,
- die signierte privilegierte Transaktion (14a) an eine Vielzahl der anderen Knoten (26-30) der Blockchain (10) rundzusenden, wobei die anderen Knoten (26-30) ausgestaltet sind um zu validieren, ob dem Benutzer erlaubt ist, die privilegierte Transaktion (14a) durchzuführen, wobei die Erlaubnis, die privilegierte Transaktion (14a) durchzuführen, vor der Erzeugung der privilegierten Transaktion (14a) innerhalb der Blockchain (10) gespeichert wurde, wobei die Erlaubnis als eine Transfertransaktion (14) innerhalb der Blockchain (10) gespeichert wird und die Transfertransaktion (14), die die Erlaubnis darstellt, von einer vertrauenswürdigen Wallet (20) stammt, und/oder
wobei der erste Knoten (24) geeignet ist, um einen Block (12) der Blockchain (10) für den Benutzer zu validieren, wobei der erste Knoten (24) geeignet ist, um
- den Block (12) der Blockchain (10) zu erzeugen, wobei der Block (12) eine oder mehrere Transaktionen (14) umfasst,
- eine kryptographische Signatur unter Verwendung eines privaten Schlüssels des ersten Knotens (24) zu dem Block (12) hinzuzufügen, wodurch ein signierter Block (12) erzeugt wird,
- den signierten Block (12) an eine Vielzahl der anderen Knoten (26-30) der Blockchain (10) rundzusenden, wobei die anderen Knoten (26-30) validieren, ob dem Benutzer erlaubt ist, den Block (12) zu validieren, wobei die Erlaubnis, die Validierung des Blocks (12) durchzuführen, vor der Validierung des Blocks (12) innerhalb der Blockchain (10) gespeichert wurde, wobei die Erlaubnis als eine Transfertransaktion (14) innerhalb der Blockchain (10) gespeichert wird und die Transfertransaktion (14), die die Erlaubnis darstellt, von einer vertrauenswürdigen Wallet (20) stammt.

## Revendications

1. Procédé de génération d'une transaction privilégiée (14a) dans une chaîne de blocs (10), dans lequel
- la transaction privilégiée (14a) est générée par un utilisateur au moyen d'un premier nœud (24) de la chaîne de blocs (10),
- une signature cryptographique utilisant une clé privée de l'utilisateur est ajoutée à la transaction privilégiée (14a), créant ainsi une transaction privilégiée signée (14a),
- la transaction privilégiée signée (14a) est diffusée à une pluralité d'autres nœuds (26-30) de la chaîne de blocs, dans lequel les autres nœuds (26-30) valident si l'utilisateur est autorisé à effectuer la transaction privilégiée (14a), dans lequel l'autorisation d'effectuer la transaction privilégiée (14a) a été stockée dans la chaîne de blocs (10) avant la génération de la transaction privilégiée (14a), dans lequel l'autorisation est stockée sous la forme d'une transaction de transfert (14) dans la chaîne de blocs (10) et la transaction de transfert (14) représentant l'autorisation provient d'un portefeuille de confiance (20).

2. Procédé de validation d'un bloc (12) d'une chaîne de blocs (10), dans lequel
- le bloc (12) est généré par un utilisateur de la chaîne de blocs (10) au moyen d'un premier nœud (24) de la chaîne de blocs (10), dans lequel le bloc (12) comprend une ou plusieurs transactions (14),
- une signature cryptographique utilisant une clé privée du premier nœud (24) est ajoutée au bloc (12), créant ainsi un bloc signé (12),
- le bloc signé (12) est diffusé à une pluralité d'autres nœuds (26-30) de la chaîne de blocs (10), dans lequel les autres nœuds (26-30) valident si l'utilisateur est autorisé à valider le bloc (12), dans lequel l'autorisation d'effectuer la validation du bloc (12) a été stockée dans la chaîne de blocs (10) avant la validation du bloc (12), dans lequel l'autorisation est stockée sous la forme d'une transaction de transfert (14) dans la chaîne de blocs (10) et la transaction de transfert (14) représentant l'autorisation provient d'un portefeuille de confiance (20).

3. Procédé selon la revendication 1 ou 2, dans lequel
la transaction de transfert (14) comprend une indication de l'utilisateur.

4. Procédé selon au moins l'une des revendications précédentes, dans lequel
la transaction de transfert (14) transfère un montant de monnaie du portefeuille de confiance (20) à lui-même (20).

5. Procédé selon au moins l'une des revendications 1 à 3, dans lequel
la transaction de transfert (14) transfère un montant de monnaie du portefeuille de confiance (20) à l'utilisateur (22).

6. Procédé selon au moins l'une des revendications précédentes, dans lequel
le portefeuille de confiance (20) reçoit un montant de monnaie d'un portefeuille racine (18).

7. Procédé selon la revendication 6, dans lequel
le portefeuille racine (18) est défini et stocké dans le bloc de genèse (16) de la chaîne de blocs (10).

8. Procédé selon au moins l'une des revendications précédentes, dans lequel
la transaction privilégiée (14a) effectue une génération d'un montant de monnaie.

9. Procédé selon au moins l'une des revendications 3 à 8, dans lequel
l'autorisation est révoquée en dépensant le montant transféré dans la transaction de transfert (14).

10. Système pour une chaîne de blocs (10) comprenant :
- un premier nœud (24),
- une pluralité d'autres nœuds (26-30), dans lequel les nœuds (24-30) stockent des copies de la chaîne de blocs (10),
dans lequel les nœuds (24-30) sont connectés les uns aux autres à l'aide de connexions de données (32),
et dans lequel le premier nœud (24) est adapté à :
- générer une transaction privilégiée (14a) de la chaîne de blocs (10) pour un utilisateur,
- ajouter une signature cryptographique utilisant une clé privée de l'utilisateur à la transaction privilégiée, créant ainsi une transaction privilégiée signée (14a),
- diffuser la transaction privilégiée signée (14a) à une pluralité des autres nœuds (26-30) de la chaîne de blocs (10), dans lequel les autres nœuds (26-30) sont configurés pour valider si l'utilisateur est autorisé à effectuer la transaction privilégiée (14a), dans lequel l'autorisation d'effectuer la transaction privilégiée (14a) a été stockée dans la chaîne de blocs (10) avant la génération de la transaction privilégiée (14a), dans lequel l'autorisation est stockée sous la forme d'une transaction de transfert (14) dans la chaîne de blocs (10) et la transaction de transfert (14) représentant l'autorisation provient d'un portefeuille de confiance (20), et/ou
dans lequel le premier nœud (24) est adapté à valider un bloc (12) de la chaîne de blocs (10) pour l'utilisateur, dans lequel le premier nœud (24) est adapté à :
- générer le bloc (12) de la chaîne de blocs (10), dans lequel le bloc (12) comprend une ou plusieurs transactions (14),
- ajouter une signature cryptographique utilisant une clé privée du premier nœud (24) au bloc (12), créant ainsi un bloc signé (12),
- diffuser le bloc signé (12) à une pluralité des autres nœuds (26-30) de la chaîne de blocs (10), dans lequel les autres nœuds (26-30) valident si l'utilisateur est autorisé à valider le bloc (12), dans lequel l'autorisation d'effectuer la validation du bloc (12) a été stockée dans la chaîne de blocs (10) avant la validation du bloc (12), dans lequel l'autorisation est stockée sous la forme d'une transaction de transfert (14) dans la chaîne de blocs (10) et la transaction de transfert (14) représentant l'autorisation provient d'un portefeuille de confiance (20).
